# EUROPEAN PATENT SPECIFICATION

(11) **EP 2 711 845 B1**
(45) Date of publication and mention of the grant of the patent: **02.12.2015**
(21) Application number: 13185535.5
(22) Date of filing: 23.09.2013
(51) Int. Cl.: G06F 13/40

(54) **PCI express switch with logical device capability**
PCI-Expressschalter mit logischer Vorrichtungsfähigkeit
Commutateur PCI express avec capacité de dispositif logique

(30) Priority: 21.09.2012 US 201213624781
(43) Date of publication of application: 26.03.2014
(73) Proprietor: Avago Technologies General IP (Singapore) Pte. Ltd., Singapore 768923 (SG)
(72) Inventor: Regula, Jack, Chapel Hill, NC 27516 (US); Subramaniyan, Nagarajan, San Jose, CA 95129 (US); Dodson, Jeffrey Michael, Portland, OR 97210 (US)
(74) Representative: Voges, Dieter

(56) References cited:
- WO-A2-2009/120798
- US-A1- 2006 242 354
- JACK REGULA ED - JACK REGULA: "USING NON-TRANSPARENT BRIDGING IN PCI EXPRESS SYSTEMS", 20040601 , 1 June 2004 (2004-06-01), pages 4-30, XP002686987, Retrieved from the Internet: URL:http://www.plxtech.com/files/pdf/techn ical/expresslane/NontransparentBridging.pd f

## Description

### BACKGROUND OF THE INVENTION

### Field of the Invention

The present invention relates generally to switches and electronic communication. More specifically, the present invention relates to enabling a synthetic or logical device in an intelligent PCIe switch in order to consolidate functionality of multiple devices.

### Description of the Related Art

Computer architectures have advanced greatly over the years. Lately it is becoming more and more commonplace for chip designers to include external data interfaces, such as Universal Serial Bus (USB) interface controllers into their motherboards. These interfaces are known as host controllers. The processor is typically then connected to the other components of the computer system via an input/output (I/O) interconnect system.

There are many different computer I/O interconnect standards available. One of the most popular over the years has been the peripheral component interconnect (PCI) standard. PCI allows the bus to act like a bridge, which isolates a local processor bus from the peripherals, allowing a Central Processing Unit (CPU) of the computer to connect to a host of IO devices through this interconnect.

Recently, a successor to PCI has been popularized, termed PCI Express (or, simply, PCIe). PCIe provides higher performance, increased flexibility and scalability for next-generation systems, while maintaining software compatibility with existing PCI applications. Compared to legacy PCI, the PCI Express protocol is considerably more complex, with three layers-the transaction, data link and physical layers.

In a PCI Express system, a root complex device connects the processor and memory subsystem to the PCI Express switch fabric comprised of one or more switch devices (embodiments are also possible without switches, however). In PCI Express, a point-to-point architecture is used. Similar to a host bridge in a PCI system, the root complex generates transaction requests on behalf of the processor, which is interconnected through a local I/O interconnect. Root complex functionality may be implemented as a discrete device, or may be integrated with the processor. A root complex may contain more than one PCI Express port and multiple switch devices can be connected to ports on the root complex or cascaded.

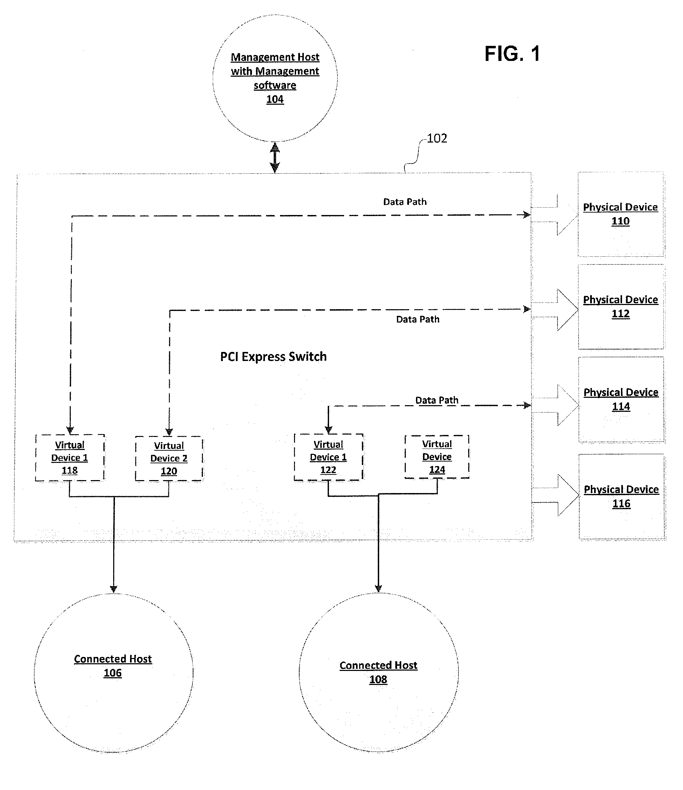

As an example, FIG. 1 is a block diagram depicting a normal shared IO architecture having a standard PCIe switch 102 controlled by management host 104 running switch management software. Switch 102 services one or more hosts, shown as connected host 106 and connected host 108 (also referred to as "local hosts"), for example servers, PCs, and other computing devices. Also connected to switch are one or more devices 110-116 that typically provide some type of function or service for the connected hosts. Within switch 102 are virtual devices 118-124. Virtual devices 118 and 120 are connected to connected host 106 and virtual devices 122 and 124 are connected to connected host 108. Some of these virtual devices have data paths to physical devices 110-114. The functionality and roles of virtual devices 118-124 are described in U.S. Patent No. 8521941, entitled "MULTI-ROOT SHARING OF SINGLE-ROOT INPUT/OUTPUT VIRTUALIZATION," where a solution was described that used resource redirection methods when multiple hosts are connected using the non-transparent ports of a PCIe switch that supports shared I/O mechanisms.

It would be desirable to further enhance the functionality of the PCIe switch through use of DMA engines, address mapping and memory space redirection to consolidate functionality of physical devices connected to the switch. In addition, it would be desirable to enable synthetic NVMe end points for connected hosts for a set of SSD drives (or other storage device) with or without additional features such as RAID or to share a set of SSD/storage drives with several connected hosts. Finally, it would be beneficial to users of the switch if it enabled sharing scarce or expensive resources among multiple connected hosts by way of software and hardware assists even if the resources do not allow sharing natively.

### SUMMARY OF THE INVENTION

According to a first aspect of the present invention, there is provided a method of enabling operation of a synthetic device in a PCIe switch, according to claim 1.

According to a second aspect of the present invention there is provided a PCI express switch according to claim 13.

One aspect is a method of enhancing the functionality of a PCI express switch by enabling operation of a non-existent, logical (or synthetic) device in the switch. The logical device is implemented by logical device software in a management system host that controls operations of the switch. The synthetic device is presented to a local host connected to the switch. Write operations within the local host are captured thereby enabling the management system to create a shadow copy of local host component queues. The local host loads a driver for the synthetic device. Writes that occur in the local host are reflected in the management system. Shadow queues are created on the management system that reflects command and response queues in the local host. A DMA engine associated with the local host port is set up to automatically trigger on queues in the local host.

### BRIEF DESCRIPTION OF THE DRAWINGS

FIG. 1. is a block diagram depicting a normal shared IO architecture having a standard PCIe switch controlled by a system management host running switch management software;
FIG. 2 is a block diagram depicting a PCIe switch having a logical device and a management host system with logical device enabling software in accordance with one embodiment; and
FIG. 3 is a flow diagram of a process of installing a synthetic or logical device on a PCIe switch in accordance with one embodiment.

### DETAILED DESCRIPTION OF SPECIFIC EMBODIMENTS

In accordance with the present invention, the components, process steps, and/or data structures may be implemented using various types of operating systems, programming languages, computing platforms, computer programs, and/or general purpose machines. In addition, those of ordinary skill in the art will recognize that devices of a less general purpose nature, such as hardwired devices, field programmable gate arrays (FPGAs), application specific integrated circuits (ASICs), or the like, may also be used.

The present invention may also be tangibly embodied as a set of computer instructions stored on a computer readable medium, such as a memory device.

Methods and systems for consolidating physical devices into a logical device in a PCIe switch wherein the logical device is implemented using software in the switch management system are described in the various figures. Generally, any device driver model that uses a command queue and completion or response queue FIFO model with doorbells and interrupts for those FIFOs can be presented to connected hosts using the methods and systems described below. Before proceeding, it is useful to describe the basic components. One, as noted, is a FIFO model for input and output from a connected host driver to a DMA engine using the connected host memory. Another is the use of doorbells for the connected host driver to indicate to the hardware that new work has been added or is waiting. Interrupts are used for each completion or response queue for each completion queue for load balancing and indicating work completion. These features are present in some PCIe switches, such as the Capella 2 switch from PLX Technologies of Sunnyvale, California. The figures below describe the additional features needed by the innovative PCIe switch of the present invention. Provided first is an overview of these additional features.

In one embodiment there are automatic updates to queues/FIFO content in the management system when the connected host generates work by adding to its command queue. The DMA engine (part of the switch port) transfers the queued work request in the command queue automatically to the management system, also referred to as a consumer/consolidation system. Another feature is a direct data path from the physical devices to the connected host. While commands (control path) go through the management system (MCPU), the data path is allowed to go directly from the physical device to the connected host. This provides a significant performance benefit and improves latency by preventing a bottleneck at the management system. For example, typical devices (including SSD storage) will do DMA requests from the device to the connected host memory (either read or writes) and these will go directly from the physical device to the connected host. The connected host's requests initially go to the management system and the management system then redirects or issues equivalent commands to the individual devices (or drives). Another feature is address isolation and the ability to access different connected hosts from any physical device endpoint. This may be enabled through address mapping/trapping features of the hardware enabled by the management system software. To present a logical device to a connected host requires that the switch trap connected host I/O enumeration cycles and also answer them correctly using the logical device software in the management system.

In one embodiment of the present invention, a logical or non-existent device connected to a PCIe switch is presented or shown to a connected host (a host connected to the PCIe switch). The logical device does not physically exist (it is non-existent), thereby enabling connection of a fictitious device to a connected host at any time. The logical device is a synthetic I/O consolidation PCIe endpoint. This logical device provides a mechanism for consolidation of physical devices. The logical device may also be a pure software created device without it corresponding to any physical devices (i.e., there are no physical devices behind it). The logical device shows up as a PCIe endpoint or as a specific implementation or deployment, such as a RAID device. It uses specific software and hardware acceleration features of the PCIe switch.

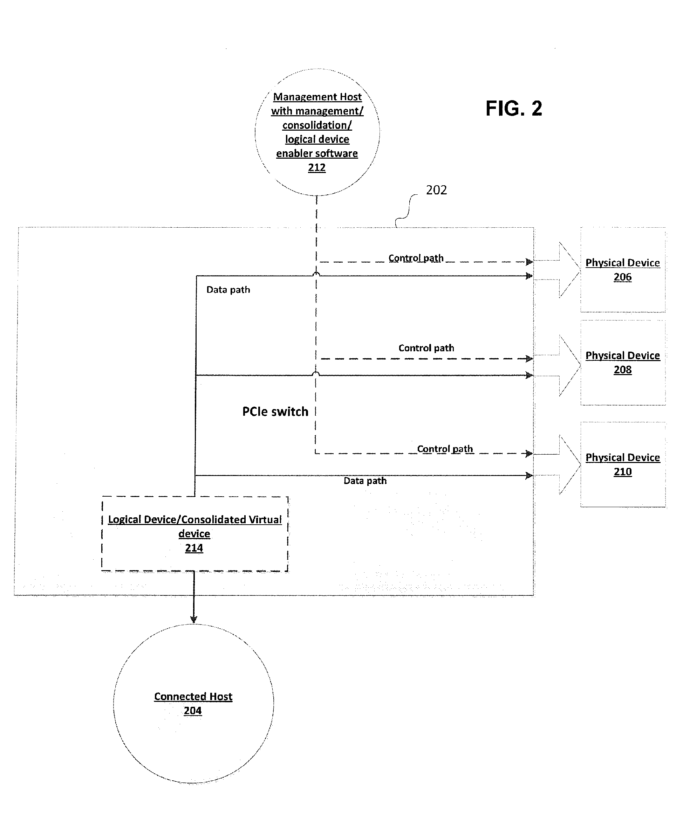

FIG. 2 is a block diagram depicting a PCIe switch having a logical device and a management host system with logical device enabling software in accordance with one embodiment. Shown is an innovative PCIe switch 202 connected to a host 204 and three physical devices 206-210. A management system host 212 with logical device software and other necessary software for operating the management system is connected to switch 202. The logical device enabling software implements a logical device 214 (also referred to as a consolidated virtual device) shown by the dashed-line box. Logical device 214 operates virtually with connected host 204. It has data paths going to physical devices 206-210. Management system host 212 has control paths shown by the dashed lines to the physical devices 206-210 that implement logical device 214. These control paths are dashed to indicate that they essentially emanate from the logical device enabling software in management system 212 and are responsible for physically implementing logical (virtual) device 214.

In the various embodiments described below, one method of implementing the logical device to the PCIe switch utilizes DMA engines in a new capacity, address mapping and translation and configuration, and memory space and configuration space redirection features. For example, the address mapping may be needed so that Base Address Registers (BARs) in the logical device are mapped to the management memory by software in the host management system. In this manner, features of various physical devices are consolidated under one logical device. Another advantage is that if one physical device has an error or becomes disabled, then the logical device can still operate (e.g., the host system will not encounter a 'blue screen' scenario). Interrupt consolidation and generation is also possible, thereby easing the load on the host system. Without this consolidation, if there are '*n*' physical devices, there may be as many as '*n*' devices sending interrupts which in some cases may be overload for a connected host. Interrupts from one logical device would ease the workload of the host system. In another deployment scenario, the logical device can be an NVMe endpoint which may consolidate physical NVMe or non-NVMe storage devices (e.g., SATA drives, SSC drives).

The methods described in related applications describe how a physical device is presented to a host. As noted above, the present invention addresses presenting a logical, non-existent device to a host by mapping address spaces for the logical device into a host management system CPU. The logical device is also tied to a DMA engine, thus, when the device is presented to a host, the host is able to see only the logical device and not the DMA functions. Generally, if only the logical device is connected to the PCIe switch, a connected host will not see or be aware of the underlying DMA or non-transparent (NT), even though the DMA and NT functions are operating, but just not shown to the host.

The DMA engine is attached to queues and doorbells as explained below. Queues are allocated in host memory and written to the logical device. Queues are mapped into the host management system memory (FIFO). The DMA is then programmed to tie the queues in the logical device to host system memory queues. In addition, doorbells in the connected host may also be mapped to the host management system doorbell stack. As is known in the art, a device driver sends commands to a command queue in the device. There may be one or more command queues. The hardware performs operations on the data in the command queue and the results are stored in a response queue. As noted, the logical device has a FIFO for implementing these queues and a DMA engine is attached to them or is programmed to tie to the queues in the logical device.

When the connected host driver activates or "rings" the doorbell of the logical device (i.e., when the connected host wants to use a function provided by the logical device), the logical device DMA engine wakes up since it is tied to the logical device and more specifically is aware of the logical device command queue. The DMA engine transports this to management system interrupts. The work requested by the connected host is inserted in the queue and the process follows its normal course of operation.

The logical software on the host is able to perform the work without extraneous or additional software on the host. It can be done solely with hardware assistance.

The connected host driver writes operations to the device configuration space or BARs. Specifically, it will write to the device's registers in the BAR that are reflected in a shadow space in the host management system memory. As such, shadow copies of BARS are on the host management system. Thus, when there is a write to the BARs in the logical device, it is reflected in the management system.

The shadow memory in the host management system captures writes that are originally in the connected host. As is known in the art, when the connected host loads a driver, it starts using registers in the BAR which is specific to device that is presented. The driver begins operating, configuring commands, and bringing up the device. The PCIe switch re-directs all writes and commands into the management system. As noted all writes in the connected host will appear in the host management system shadow memory via the PCIe switch.

One step is setting up the data command and response queues on the local host memory. Commands for setting up or configuring the space (such as how many queues need to be supported, the number of logical disks, etc.) and other configuration questions may be answered or tended to by the logical software on the host management system. The driver configures the queues by allocating local system memory for the FIFO and writing base address and size to the hardware.

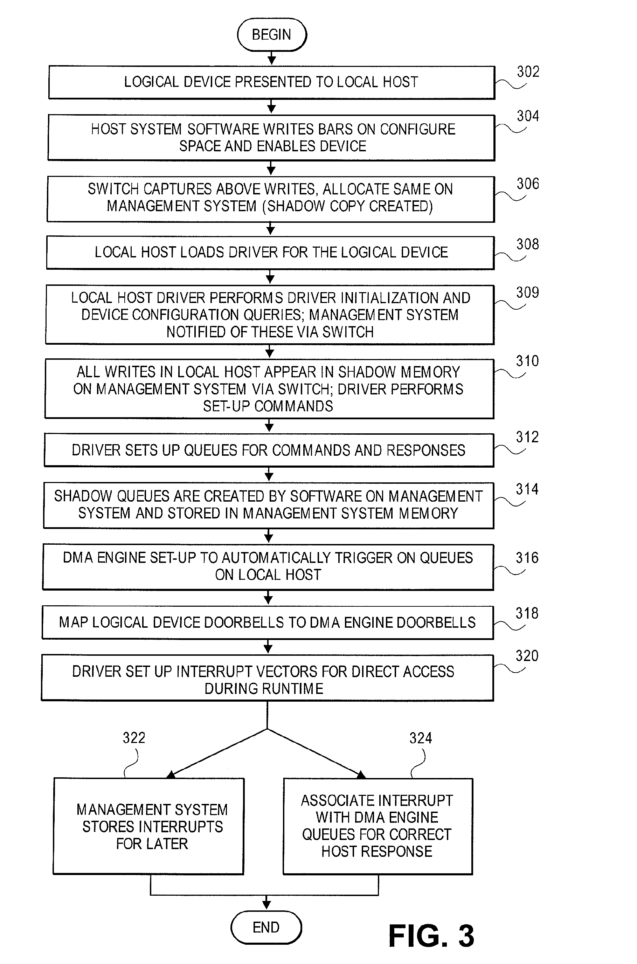

FIG. 3 is a flow diagram of a process of installing a synthetic or logical device on a PCIe switch in accordance with one embodiment. At step 302 the synthetic device is presented on or shown to a local host connected to the switch. The local host (herein "host") enumerates devices on the PCIe by performing configuration cycles on a bus captured by the device. This is described in the parent patent application. At step 304 the host system software writes BARs on the configuration space and enables the logical device. At step 306 the switch captures the writes at step 304 thereby enabling the management system to build the same configuration as on the local host. It can allocate the same memory space so there is a one-to-one mapping within the BARs and memory space. Thus, there is now a shadow copy of the local host BAR in the management system.

At step 308 the local host loads a driver for the logical device. The management system is notified of the same operations via the switch. That is, when the local host writes something to the BARs in the host memory, these writes will be reflected in the shadow memory in the management system. At step 309 the local host driver performs driver initialization and device configuration queries. The management system is notified of these via the switch. At step 310 all writes in the local host appear in the shadow memory on the management system. The driver performs set-up commands.

At step 312 the driver sets up queues for commands and responses in the local host as it normally would. These FIFO queues for storing commands and responses are known in the art. At step 314 shadow queues are created by software on the management system and stored in memory. The queues in the local host are essentially mapped to the management system memory. At step 316 the DMA engine for the port of the local host is set up to automatically trigger on queues on the local host. That is, the DMA engine is programmed to tie the command queue in the local host to the command queue in the management system memory. This mapping is also done with the doorbells in the local host at step 218. Therefore, when the host driver rings the doorbell, the DMA wakes up (i.e., is automatically triggered).

At step 320 the local host driver sets up interrupt vectors and handlers on the local host. These interrupts are sent to the management system at which time one of two different actions may occur. At step 322 the management system stores the interrupt vectors for direct access during runtime. At step 324 the interrupt vector is associated with the DMA engine queues that will manage the local host response queues. At this stage the installation of the logical device on the PCIe switch is complete.

As described above, the logical device is implemented by software in the management system. It is this software that does work on the data and directs it to the physical device. When the physical device completes the function or work, a completion signal is sent to the management system which ordered the work via logical device software where the features of the physical device are consolidated. The response from the work is sent directly to the local host where it is stored in the response queue. This update to the local host response queue is still reflected in shadow memory of the management system.

The description herein provides a number of new features and improvements to existing PCIe switching technology. In one embodiment, hardware assists to enable I/O physical device consolidation is described, while adding or enabling value-added features using this consolidation. Separation and isolation of hot-plug events from the connected physical devices to the connected port through the use of a logical or synthetic endpoint in the connected host is described. There are also performance improvements by virtue of the consolidation and isolation of interrupts generated by connected physical devices to a connected host. Finally, it should be noted that the embodiments described above are extensible with software in the management system. There can be multiple hosts and physical devices (e.g., there can be 15 physical devices being shadowed by 5 connected hosts all connected to one PCIe switch).

The various aspects, embodiments, implementations or features of the described embodiments can be used separately or in any combination. Various aspects of the described embodiments can be implemented by software, hardware or a combination of hardware and software. The described embodiments can also be embodied as computer readable code on a computer readable medium. The computer readable medium is defined as any data storage device that can store data which can thereafter be read by a computer system. Examples of the computer readable medium include read-only memory, random-access memory, CD-ROMs, DVDs, magnetic tape, and optical data storage devices. The computer readable medium can also be distributed over network-coupled computer systems so that the computer readable code is stored and executed in a distributed fashion.

## Claims

1. A method of enabling operation of a synthetic device in a PCIe switch(102), the method comprising:
presenting the synthetic device to a local host component (106, 108) connected to the switch;
capturing read and write operations within the local host, thereby enabling a management system of the switch to create a shadow copy of local host component queues; notifying the management system of local host driver operations, wherein the local host loads a driver;
enabling writes that occur in the local host to be reflected in a memory on the management system; enabling creation of shadow queues on the management system, said shadow queues reflecting command and response queues in the local host; setting up a DMA engine associated with the local host port to automatically trigger on queues in the local host; and
enabling mapping of synthetic device doorbells to DMA engine doorbells,
wherein there is a control path between the management system and a physical device (110) for transmitting commands relating to the synthetic device and a data path between the physical device and the local host.

2. A method as recited in claim 1 further comprising:sending interrupt vectors on the local host to the management system.

3. A method as recited in claim 1 or 2 further comprising:associating interrupt vectors with DMA engine queues for appropriate host device response.

4. A method as recited in any of claims 1-3 wherein a plurality of local hosts and a plurality of physical devices use the synthetic device.

5. A method as recited in any of the preceding claims wherein the management system has a synthetic device enablement module that provides executable instructions for implementing the synthetic device in the switch.

6. A method as recited in claim 5 wherein the enablement module performs operations on data from the local host and directs the data to the physical device.

7. A method as recited in any of the preceding claims wherein the management system has a shadow copy of queues stored on the local host.

8. A method as recited in any of the preceding claims wherein when the physical device completes a function requested by the local host, a completion signal is sent to the management system and a response is sent directly to the local host.

9. A method as recited in any of the preceding claims wherein there is a one-to-one mapping of updates to queues in the local host that are reflected in the shadow queues in the management system.

10. A method as recited in any of the preceding claims wherein the synthetic device is software-created device without an associated physical device.

11. A method as recited in any of the preceding claims further comprising mapping addresses between the local host and the management system thereby enabling data transmission between the physical device and the local host.

12. A method as recited in any of the preceding claims further comprising allocating queues in the local host and writing the queues to the synthetic device.

13. A PCI express switch comprising a processor configured to execute code to implement the method steps of any of claims 1 to 12.

14. The PCI express switch of claim 13 in connection with a management system having a logical device enabler module for implementing a logical consolidation of physical devices in the switch, wherein the logical consolidation is used by a connected host and wherein a memory in the management system stores shadow copies of a command queue, a response queue, and a doorbell as stored in the logical device.

## Patentansprüche

1. Ein Verfahren zum Ermöglichen eines Betriebs einer synthetischen Vorrichtung in einem PCIe Schalter (102), wobei das Verfahren aufweist:
Präsentieren der synthetischen Vorrichtung an eine lokale Hostkomponente (106, 108), welche mit dem Schalter verbunden ist;
Erfassen von Lese- und Schreibvorgängen innerhalb des lokalen Hosts, wobei dadurch einem Managementsystem des Schalters ermöglicht wird, eine Schattenkopie von lokalen Hostkomponenten-Warteschlangen zu schaffen;
Benachrichtigen des Managementsystems über lokale Hosttreibervorgänge, wobei der lokale Host einen Treiber lädt;
Ermöglichen, dass Schreibvorgänge, die in dem lokalen Host stattfinden, sich in einem Speicher auf dem Managementsystem widerspiegeln;
Ermöglichen eines Schaffens von Schatten-Warteschlangen auf dem Managementsystem, wobei die Schatten-Warteschlangen Befehl- und Antwort-Warteschlangen in dem lokalen Host widerspiegeln;
Aufstellen einer DMA Engine, welche mit dem lokalen Hostport verknüpft ist, um automatisch auf Warteschlangen in dem lokalen Host zu triggern; und
Ermöglichen eines Abbildens von synthetischen Vorrichtungs-Doorbells zu DMA Engine-Doorbells,
wobei ein Steuerpfad zwischen dem Managementsystem und einer physischen Vorrichtung (110) zum Übertragen von Befehlen besteht, welche sich auf die synthetische Vorrichtung und einen Datenpfad zwischen der physischen Vorrichtung und dem lokalen Host beziehen.

2. Ein Verfahren gemäß Anspruch 1, ferner aufweisend:
Senden von Interrupt-Vektoren auf dem lokalen Host zu dem Managementsystem.

3. Ein Verfahren gemäß Anspruch 1 oder 2, ferner aufweisend: Zuordnen von Interrupt-Vektoren mit DMA Engine-Warteschlangen für eine geeignete Hostvorrichtungsantwort.

4. Ein Verfahren gemäß irgendeinem der Ansprüche 1 bis 3, wobei eine Mehrzahl von lokalen Hosts und eine Mehrzahl von physischen Vorrichtungen die synthetische Vorrichtung verwenden.

5. Ein Verfahren gemäß irgendeinem der vorangehenden Ansprüche, wobei das Managementsystem ein synthetische Vorrichtungs-Ermöglichungsmodul hat, das ausführbare Anweisungen zum Implementieren der synthetischen Vorrichtung in dem Schalter bereitstellt.

6. Ein Verfahren gemäß Anspruch 5, wobei das Ermöglichungsmodul Abläufe auf Daten von dem lokalen Host ausführt und die Daten zu der physischen Vorrichtung leitet.

7. Ein Verfahren gemäß irgendeinem der vorangehenden Ansprüche, wobei das Managementsystem eine Schattenkopie von Warteschlangen hat, die auf dem lokalen Host gespeichert sind.

8. Ein Verfahren gemäß irgendeinem der vorangehenden Ansprüche, wobei, wenn die physische Vorrichtung eine Funktion abschließt, die von dem lokalen Host angefordert wird, ein Abschlusssignal zu dem Managementsystem gesendet wird und eine Antwort direkt zu dem lokalen Host gesendet wird.

9. Ein Verfahren gemäß irgendeinem der vorangehenden Ansprüche, wobei ein eins-zu-eins Abbilden von Updates zu den Warteschlangen in dem lokalen Host besteht, welche sich in den Schatten-Warteschlangen in dem Managementsystem widerspiegeln.

10. Ein Verfahren gemäß irgendeinem der vorangehenden Ansprüche, wobei die synthetische Vorrichtung eine Software-geschaffene Vorrichtung ohne eine verknüpfte physische Vorrichtung ist.

11. Ein Verfahren gemäß irgendeinem der vorangehenden Ansprüche, ferner aufweisend
Abbilden von Adressen zwischen dem lokalen Host und dem Managementsystem, wobei dadurch Datenübertragung zwischen der physischen Vorrichtung und dem lokalen Host ermöglicht wird.

12. Ein Verfahren gemäß irgendeinem der vorangehenden Ansprüche, ferner aufweisend
Zuweisen von Warteschlangen in dem lokalen Host und Schreiben der Warteschlangen zu der synthetischen Vorrichtung.

13. Ein PCI Expressschalter, aufweisend einen Prozessor, welcher konfiguriert ist, Code auszuführen, um die Verfahrensschritte gemäß den Ansprüchen 1 bis 12 zu implementieren.

14. Der PCI Expressschalter gemäß Anspruch 13 in Verbindung mit einem Managementsystem, welches ein logisch-Vorrichtungsermöglicher-Modul zum Implementieren einer logischen Konsolidierung von physischen Vorrichtungen in dem Schalter hat, wobei die logische Konsolidierung von einem verbundenen Host verwendet wird, und wobei ein Speicher in dem Managementsystem Schattenkopien einer Befehl-Warteschlange, einer Antwort-Warteschlange, und einer Doorbell speichert, wie sie in der logischen Vorrichtung gespeichert sind.

## Revendications

1. Procédé pour permettre le fonctionnement d'un dispositif synthétique dans un commutateur PCIe (102), le procédé comprenant :
la présentation du dispositif synthétique à un composant d'hôte local (106, 108) connecté au commutateur ;
la capture d'opérations de lecture et d'écriture dans l'hôte local, permettant ainsi à un système de gestion du commutateur de créer une copie répliquée de files d'attente de composant d'hôte local ; la notification d'opérations de gestionnaire d'hôte local au système de gestion, dans lequel l'hôte local charge un gestionnaire ;
le fait de permettre à des écritures qui se produisent dans l'hôte local d'être réfléchies dans une mémoire sur le système de gestion ; le fait de permettre la création de files d'attente répliquées sur le système de gestion, lesdites files d'attente répliquées reflétant des files d'attente de commandes et de réponses dans l'hôte local ; la configuration d'un moteur DMA associé au port d'hôte local pour déclencher automatiquement des files d'attente dans l'hôte local ; et
le fait de permettre la mise en correspondance de sonnettes de dispositif synthétique avec des sonnettes de moteur DMA,
dans lequel il existe une voie de commande entre le système de gestion et un dispositif physique (110) pour transmettre des commandes relatives au dispositif synthétique et une voie de données entre le dispositif physique et l'hôte local.

2. Procédé selon la revendication 1, comprenant en outre : l'envoi de vecteurs d'interruption sur l'hôte local au système de gestion.

3. Procédé selon la revendication 1 ou 2, comprenant en outre : l'association de vecteurs d'interruption à des files d'attente de moteur DMA pour une réponse de dispositif hôte approprié.

4. Procédé selon l'une quelconque des revendications 1 à 3, dans lequel une pluralité d'hôtes locaux et une pluralité de dispositifs physiques utilisent le dispositif synthétique.

5. Procédé selon l'une quelconque des revendications précédentes, dans lequel le système de gestion a un module d'habilitation de dispositif synthétique qui fournit des instructions exécutables pour la mise en oeuvre du dispositif synthétique dans le commutateur.

6. Procédé selon la revendication 5, dans lequel le module d'habilitation effectue des opérations sur des données provenant de l'hôte local et dirige les données vers le dispositif physique.

7. Procédé selon l'une quelconque des revendications précédentes, dans lequel le système de gestion a une copie répliquée de files d'attente stockées sur l'hôte local.

8. Procédé selon l'une quelconque des revendications précédentes, dans lequel, quand le dispositif physique achève une fonction demandée par l'hôte local, un signal d'achèvement est envoyé au système de gestion et une réponse est envoyée directement à l'hôte local.

9. Procédé selon l'une quelconque des revendications précédentes, dans lequel il existe une mise en correspondance de une à une de mises à jours avec des files d'attente dans l'hôte local qui sont réfléchies dans les files d'attente répliquées dans le système de gestion.

10. Procédé selon l'une quelconque des revendications précédentes, dans lequel le dispositif synthétique est un dispositif créé par logiciel sans un dispositif physique associé.

11. Procédé selon l'une quelconque des revendications précédentes, comprenant en outre la mise en correspondance d'adresses entre l'hôte local et le système de gestion permettant ainsi une transmission de données entre le dispositif physique et l'hôte local.

12. Procédé selon l'une quelconque des revendications précédentes, comprenant en outre l'attribution de files d'attente dans l'hôte local et l'écriture des files d'attente sur le dispositif synthétique.

13. Commutateur PCI express comprenant un processeur configuré pour exécuter un code pour mettre en oeuvre les étapes de procédé de l'une quelconque des revendications 1 à 12.

14. Commutateur PCI express selon la revendication 13, en connexion avec un système de gestion ayant un module d'habilitation de dispositif logique pour mettre en oeuvre un regroupement logique de dispositifs physiques dans le commutateur, dans lequel le regroupement logique est utilisé par un hôte connecté et dans lequel une mémoire dans le système de gestion stocke des copies répliquées d'une file d'attente de commandes, d'une file d'attente de réponses et d'une sonnette telles que stockées dans le dispositif logique.
